(19) Europäisches Patentamt
European Patent Office
Office européen des brevets

(11) EP 0 868 124 B1

(12) EUROPEAN PATENT SPECIFICATION

(45) Date of publication and mention of the grant of the patent:
**26.03.2003 Bulletin 2003/13**

(21) Application number: **96942466.2**

(22) Date of filing: **17.12.1996**

(51) Int Cl.[7]: **A23D 9/013**, A23L 1/164, A23L 1/217

(86) International application number:
**PCT/GB96/03107**

(87) International publication number:
**WO 97/022261 (26.06.1997 Gazette 1997/27)**

# (54) FATTY ACID ESTERIFIED PROPOXYLATED GLYCERIN AS FRYING OIL COMPOSITIONS

FETTSÄURE-VERESTERTES PROPOXYLIERTES GLYZERIN IN FRITTIERÖL-ZUSAMMENSETZUNGEN

GLYCERINE PROPOXYLEE, ESTERIFIEE A L'AIDE D'ACIDES GRAS ET UTILISEE DANS DES COMPOSITIONS D'HUILE DE FRITURE

(84) Designated Contracting States:
**BE DE ES FR GB IT NL SE**

(30) Priority: **20.12.1995 US 575711**

(43) Date of publication of application:
**07.10.1998 Bulletin 1998/41**

(73) Proprietors:
- **Bestfoods**
  **Englewood Cliffs, NJ 07632 (US)**
- **ARCO Chemical Technology, L.P.**
  **Greenville, Delaware 19807 (US)**

(72) Inventors:
- **SEKULA, Bernard, Charles**
  **Glen Gardner, NJ 08826 (US)**
- **GOLDEN, Rosemary, Antoinette**
  **Milltown, NJ 08850 (US)**

(74) Representative:
**Eastwood, Simon Christopher et al**
**Stevens Hewlett & Perkins**
**1 St Augustine's Place**
**Bristol BS1 4UD (GB)**

(56) References cited:
**EP-A- 0 433 016**
**EP-A- 0 571 219**
**EP-A- 0 667 105**
**EP-A- 0 726 030**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 868 124 B1

Printed by Jouve, 75001 PARIS (FR)

## Description

## BACKGROUND OF THE INVENTION

### Field of the Invention

The present invention has to do with reduced calorie snacks prepared by frying in an admixture of vegetable oil and a fat replacement composition. More specifically, the invention relates to the use of a fat component wherein some of the oil conventionally used in frying has been replaced by a fatty acid-esterified propoxylated glycerin composition that is solid at ambient temperatures. The snacks are flavorful and do not have the waxy texture associated with previously employed fat replacement compositions.

### Description of the Related Art

Snacks, such as potato and corn chips, are typically prepared by frying in liquid or partially hydrogenated vegetable oils. These include soybean, canola, cottonseed, corn, sunflower, peanut, safflower and partially hydrogenated soybean, canola, cottonseed, corn and sunflower oils. The oils impart a pleasant fried flavor to snack products as well as an oily/greasy texture. Solid fats are not used in the preparation of fried snacks because the high level of absorbed oil in the fried product, generally from about 25% to about 45% by weight, would result in a waxy mouthfeel upon consumption.

Since fats make up approximately 40% of the diet and are calorically dense, research efforts have focused on ways to produce low/no-fat foods that provide the same functional and organoleptic properties as their full-fat counterparts, but not the calories. These efforts have led to the development of lipid-based fat replacers for both non-heated and heated applications. Examples of lipid-based fat replacers include the acylated glycerides described in U.S. Patent No. 4,582,715, sucrose octaesters described in U.S. Patent No. 4,797,300, alkyl glycoside fatty acid polyesters described in U.S. Patent No. 4,840,815, polyoxyalkylene derivatives described in U.S. Patent No. 4,849,242, polymerized fatty acid esters described in U.S. Patent No. 4,980,191, polysiloxane oil described in U.S. Patent No. 4,983,413, cyclohexyl diol diesters described in U.S. Patent No. 5,006,351, long chain diol diesters described in U.S. Patent No. 5,008,126, amide ether derivatives described in U.S. Patent No. 5,063,075, complex linked esters described in U.S. Patent No. 5,115,017, carboxy/carboxylate disubstituted esters described in U.S. Patent No. 5,124,166, amide linked fat mimetics described in U.S. Patent No. 5,139,807, substituted succinate esters described in U.S. Patent No. 5,176,933, acylated amino acid ester derivatives described in U.S. Patent No. 5,190,782, primary amide esters described in U.S. Patent No. 5,190,783, 2,3-butane-diol diesters described in U.S. Patent No. 5,264,237, and extended ester derivatives described in U.S. Patent No. 5,266,346. Processes for the production of reduced-calorie low-fat potato chips are described in U.S. Patents Nos. 5,085,884, 5,100,684, 5,192,572 and 5,236,733.

Other fat replacement compositions which have been developed for use in low calorie fat-containing foods are described as useful in heated environments. An early development employing sugar fatty acid ester compositions is described in U.S. Patent No. 3,600,186, and the compositions are said to be suitable for use in frying eggs, meat, fish, potatoes and the like.

The use of sucrose polyesters as fat replacement compositions is disclosed in U.S. Patent No. 4,789,664 in foods described as having blood cholesterol lowering properties but they are not suggested as a substitute for the oils normally used in frying.

In European Patent Application 0 236 288, low calorie fat materials are described which include sugar fatty acid polyesters, polyglycerol fatty acid esters and tricarboxylic acids esterified with fatty alcohols. The materials are said to be useful in a wide variety of food products, including fried snack foods such as potato chips, corn chips and the like. Polyol polyesters and their use in shortenings and foods also are described in European Patent Specification 0 290 420. The polyesters are said to be useful to make foods which are fried in oil including fried and/or salted snack foods.

Feeding trials have shown that certain lipid-based fat replacers elicit undesirable gastrointestinal side effects such as passive oil leakage through the anal sphincter. These effects appear to correlate with the physical state of these fat replacers in the body, which, in turn, may be affected by their digestibility and/or absorbability.

All of the low calorie fat replacement compositions and low fat fried snacks discussed above have drawbacks either in the processes which employ them or the flavor and mouthfeel characteristics of the finished reduced fat products. In particular, when such compositions are used in frying, the fat becomes visible when the product is cooled and/or the fat is detectable as a waxy mouthfeel.

Reduced calorie food compositions containing fat-type organoleptic ingredients are known wherein an esterified epoxide-extended polyol is employed as a full or partial replacement for vegetable oils and fats. Fat substitutes of this type are disclosed in US Patent No. 4,861,613 to White et al. (referred to herein as "White" and incorporated

by reference herein in its entirety). However, it has not heretofore been known that such substances can be used in combination with the oils conventionally used in frying to make reduced calorie fried snack foods having superior flavor and mouthfeel properties.

EP-A-0571219 discloses esterified propoxylated glycerin fat substitute compositions resistant to gastrointestinal side effects. The compositions have a solid fat index at 27°C (80°F) of at least 30 as measured by dilatometry.

It has now been found that certain fatty acid-esterified propoxylated glycerin compositions which are solid at ambient temperature can be employed as a substitute for some of the oil used to prepare fried snack foods such as potato chips and corn chips to make fried snacks having reduced calories and excellent organoleptic properties.

With the use of a fat component according to our invention, reduced-calorie fried snacks can be prepared without significantly modifying conventional processes. The snacks are neither oily nor greasy to the touch nor waxy in the mouth. The flavor of the snacks can be controlled to suit the desired taste by selecting the appropriate ratio of fatty acid-esterified propoxylated glycerin to convention vegetable oil and, for example, potato chips can be made which exhibit more potato flavor and less oil flavor.

In the present specification and claims, all parts and percentages are by weight unless otherwise specified.

## SUMMARY OF THE INVENTION

Reduced calorie fried snacks are prepared by frying in an admixture of the liquid or partially hydrogenated vegetable oils conventionally used in preparing fried snacks and certain fatty acid-esterified propoxylated glycerin compositions which function as fat replacement compositions. Suitable fatty acid-esterified propoxylated glycerin compositions surprisingly are those which have a high solids content at about 33°C (92°F) and have a melting point as high as about 43°C (110°F). The fat replacement compositions surprisingly do not cause the reduced calorie fried snacks to have a waxy mouthfeel even though the compositions exhibit a relatively high solids content at normal body temperature.

Thus, according to the present invention, there is provided the use of a fat component comprising

a) from 40% to 60% of a fatty acid-esterified propoxylated glycerin composition which is at solid state at ambient temperature having a solid fat index at 33°C (92°F) of more than 25 but less than 70, wherein the solid fat index of said fatty acid-esterified propoxylated glycerin composition at 40°C (104°F) is less than 5, said composition having an average number of oxypropylene units of from 3 to 10, a porcine pancreatic lipase hydrolysis rate of less than 1% compared to an olive oil standard and an iodine number of less than 30; and

b) a liquid or partially hydrogenated vegetable oil selected from the group consisting of soybean, canola, cottonseed, corn, sunflower, peanut and safflower and partially hydrogenated soybean, canola, cottonseed, corn and sunflower oils,

for frying a reduced calorie fried snack product that does not impart a waxy mouthfeel sensation.

Suitable compositions for use according to the invention can be identified based on their solid fat index properties. The solid fat index (sometimes abbreviated herein as "SFI") referred to throughout the present specification is determined in accordance with AOCS Official Method Cd 10-57 (available from American Oil Chemists' Society, 1608 Broadmoor Dr., Champaign, IL 61821-5930 USA). The fatty acid-esterified propoxylated glycerin compositions meeting the following SFI specifications are suitable for use according to the invention:

SFI > about 25 at 33°C (92°F);
SFI < about 70 at 33°C (92°F); more preferably
< about 60; most preferably < about 50; and
SFI < about 5 at 40°C (104°F).

The fatty acid-esterified propoxylated glycerin compositions (sometimes referred to herein as "EPG" in the singular form and as "EPGs" in the plural form) are made by incorporating propylene oxide (sometimes referred to herein as "oxypropylene" or "PO") groups into a typical triglyceride fat as described in White. The triglyceride fat can contain one fatty acid or a blend of fatty acids. The average number of PO groups which are incorporated into a triglyceride is called the propoxylation number. The melting properties and other characteristics of the composition can be modified by adjusting the propoxylation number, fatty acid chain length or unsaturation level.

In the present invention, a preferred embodiment of the reduced-calorie fried snacks employ as a partial substitute for the oils conventionally used to prepare fried snacks an EPG which is prepared by the propoxylation of glycerol to a propoxylation number of 5 followed by esterification with a blend of nine parts fully hydrogenated rapeseed oil fatty acids and one part liquid soybean oil fatty acids and hydrogenation to a final IV of ≤ about 10, referred to herein as EPG-05 9HR/1LS(IV≤10), preferably to a final IV of from about 2-6, referred to herein as EPG-05 9HR/1LS(IV=2-6). This composition has a dropping point of 109.9°F according to AOCS method Cc 18-80 (93) and yet the fried snacks prepared using the composition do not have a waxy mouthfeel. This is surprising because the dropping point is higher

than body temperature (about 37°C (98.6°F)). The reduced calorie snacks of the invention also exhibit a high anal leakage tolerance.

## DETAILED DESCRIPTION OF THE INVENTION

In order for the fatty acid-esterified propoxylated glycerin compositions of this invention to function effectively as partial substitutes for the liquid or partially hydrogenated vegetable oils conventionally used in frying snack foods, the replacement compositions have a high solids content at about 33°C (92°F). Thus, mixtures of two or more different EPGs (i.e., having different propoxylation numbers) of the same fatty acid composition can be used, mixtures of two or more EPGs of different fatty acid compositions having the same or different propoxylation numbers can be used, and any combination thereof can be used as long as the desired melting profile characteristics are obtained.

The fatty acid-esterified propoxylated glycerin compositions of this invention contain glyceryl residues, oxypropylene units, and fatty acid acyl

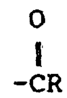

groups. Typically, the compositions are mixtures of individual fatty acid-esterified propoxylated glycerin compounds which may differ from each other in degree of propoxylation and acyl group composition. The glyceryl residue may have the generic structure

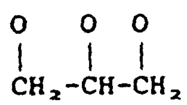

and is derived from glycerin

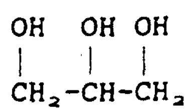

or a glycerin equivalent. The oxypropylene units are generally interspersed between glyceryl residues and the acyl groups and have the structure

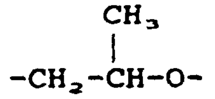 or 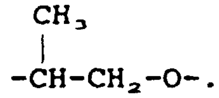

Typically, more than one oxypropylene unit may be present between an oxygen of an individual glyceryl residue and an acyl group such that a polyoxypropylene unit is created. However, a single "branch" or "arm" of the fatty acid-esterified propoxylated glycerin may contain only one oxypropylene unit. Certain of the acyl groups may be attached directly to the glyceryl residue, without any intervening oxypropylene units, although an average of at least about 3 oxypropylene units per glyceryl residue must be present in the overall composition. The average number of oxypropylene units in the fatty acid-esterified propoxylated glycerin composition is from about 3 to about 10. The presence of oxypropylene units is critical, as the oxypropylene units help to lower the melting point of the compositions thereby improving the mouthfeel and melting characteristics as compared to analogous compositions not containing oxypropylene units.

In order to maximize the resistance of the fatty acid-esterified propoxylated glycerin composition towards pancreatic lipase enzyme-catalyzed hydrolysis, the oxypropylene units adjacent to the acyl groups should be oriented

such that secondary rather than primary ester linkages are created. That is, the methyl group should be located on the carbon atom attached to the oxygen atom forming part of the ester linkage as follows:

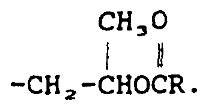

Preferably, at least about 80% of the ester linkages in the overall composition are secondary. Most preferably, at least about 95% of the ester linkages are secondary. However, the secondary ester content can be less than about 80% without adversely affecting the fat replacement properties of the EPGs of the invention.

It is desirable for the fatty acid-esterified propoxylated glycerin composition to be substantially esterified such that it has an average of at least about 2.5 (more preferably, at least about 2.9) fatty acid acyl groups per equivalent of glycerin. The extent of esterification may be readily determined by conventional analytical methods such as hydroxyl number.

The structure of the composition preferably is such that the composition has a porcine pancreatic lipase hydrolysis rate of less than 1% as compared to an olive oil standard. Methods of measuring porcine pancreatic lipase hydrolysis rate are described in White.

The average number of oxypropylene units in the EPG must not be so low as to result in a high proportion of the acyl groups being attached directly to glyceryl residues since such directly attached acyl groups will be nearly as susceptible to enzymatic cleavage as the acyl groups in a conventional fully digestible triglyceride, thus reducing the usefulness of the composition as a low calorie fat substitute. At the same time the average number of oxypropylene units should not exceed about 10 since the resulting compounds may be substantially lower in melting point or higher in melt viscosity than is needed to meet the requirements of the invention.

The solid fat index for a given EPG may be adjusted as needed by varying the average number of oxypropylene units per glycerin (propoxylation number) present in the composition. At a constant fatty acid acyl group content (i.e., if the relative proportions of the different acyl groups present are fixed), the solid fat index at a particular temperature will increase as the propoxylation number is decreased and will decrease as the propoxylation number is increased. As the average number of fatty acid acyl group carbons per equivalent of glycerin decreases or as the iodine number of the composition increases (as a result of increasing the proportion of unsaturated fatty acid acyl groups present), the average number of oxypropylene units per glycerin will need to be decreased to maintain the solid fat index at a given temperature above a predetermined target value. If a particular fatty acid-esterified propoxylated glycerin composition has an undesirably high solid fat index at a given temperature the index may be brought below a predetermined target value by increasing the propoxylation number. By so adjusting the average number of oxypropylene units per equivalent of glycerin, the melting properties of each EPG may be controlled to obtain a fat replacement composition having a solid fat index which meets the requirements of the invention.

Suitable EPGs may be prepared using either fatty acids or fatty acid derivatives such as fatty acid esters, fatty acid halides, or fatty acid anhydrides. Generally speaking, $C_{12}$-$C_{24}$ saturated linear fatty acids and their derivatives can be used as starting materials for preparing the EPGs of the invention.

In addition, the iodine number (which reflects the proportion of unsaturated fatty acid acyl groups in the composition) must be less than about 30, more preferably is less than about 20, and most preferably is less than about 10 centigrams $I_2$ per gram of the composition. A relatively minor proportion of unsaturated fatty acid acyl groups may be advantageous, however, in order to ensure that the composition does not melt over an excessively narrow range. Iodine number (also referred to as iodine value) may be measured by AOCS Official Method Cd 1-25.

The $C_{12}$-$C_{24}$ saturated fatty acid is linear (i.e., nonbranched) and preferably contains only one carboxylic acid functionality. The acyl group may thus correspond to the general structure

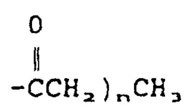

wherein n is an integer of from 10 to 22. The value of n is most conveniently an even number (e.g., 10, 12, 14, 16, 18, 20, or 22) since the corresponding fatty acids are readily available at low cost from natural sources such as edible triglycerides. Specific illustrative fatty acids suitable for use as this component of the fatty acid-esterified propoxylated glycerin compositions include, but are not limited to lauric acid, myristic acid, stearic acid, palmitic acid, eicosanoic

(arachidic) acid, heneicosanoic acid, docosanic (behenic) acid, tricosanoic acid, and tetracosanoic (lignoceric) acid. Mixtures of these $C_{12}$-$C_{24}$ saturated linear fatty acids may also be utilized to advantage, as discussed above.

While all of the acyl groups in the fatty acid-esterified propoxylated glycerin composition may be derived from $C_{12}$-$C_{24}$ saturated linear fatty acid, the compositions may contain minor amounts of acyl groups derived from other $C_8$-$C_{24}$ fatty acids. Preferably, the proportion of such other acyl groups is less than 40%. Generally speaking, the incorporation of acyl groups which are relatively short in length ($C_8$-$C_{18}$), unsaturated, and/or branched will tend to decrease the melting point of the resulting EPG.

The fatty acids which optionally may be used in combination with the required $C_{12}$-$C_{24}$ saturated linear fatty acids may be any of the known fatty acids such as caprylic acid, pelargonic acid, capric acid, oleic acid, cetoleic acid, palmitoleic acid, gadoleic acid, erucic acid, rincinoleic acid, linoleic acid, linolenic acid, myristoleic acid, eleostearic acid, arachidonic acid, or mixtures of these acids. Preferably, linear monocarboxylic acids containing from 0 to 5 double bonds are employed.

The proportions and chemical structures of the fatty acid acyl groups in the fat replacement compositions of this invention should be selected such that the solid fat indices as determined by dilatometry (AOCS Official Method Cd 10-57) will meet the following specifications:

SFI > about 25 at 33°C (92°F);
SFI < about 70 at 33°C (92°F); more preferably
< about 60; most preferably < about 50; and
SFI < about 5 at 40°C (104°F).

Increasing the ratio of average number of fatty acid acyl group carbons per equivalent of glycerin will shift the melting range of an EPG to a higher average temperature while decreasing the ratio will shift the melting range to a lower average temperature. The melting profile of the fat replacement composition can thus be conveniently made to meet the requirements of the invention by adjusting this ratio.

The average number of fatty acid acyl group carbons per equivalent of glycerin in the fatty acid-esterified propoxylated glycerin compositions of the invention may be readily calculated from a knowledge of the fatty acid acyl group content (i.e., the chemical structures and relative proportions of the fatty acids used to prepare the compositions). The following formula may be used to calculate this average number ($N_a$) for a fatty acid-esterified propoxylated glycerin composition prepared using fatty acids A and B:

$$N_a = \frac{\text{moles A x no. carbons in A}}{\text{moles propoxylated glycerin}} + \frac{\text{moles B x no. carbons in B}}{\text{moles propoxylated glycerin}}$$

For example, a composition prepared by reacting a mixture of 1.5 moles of stearic acid (a $C_{18}$ fatty acid) and 1.5 moles of eicosanoic acid (a $C_{20}$ fatty acid) with 1 mole of propoxylated glycerin containing an average of 7 oxypropylene units per glycerin will have an average of 57 fatty acid acyl carbons per equivalent of glycerin.

To minimize the available caloric content of the fatty acid-esterified propoxylated glycerin fat replacement compositions of this invention, the chemical composition should be selected such that the number average molecular weight is at least about 800. More preferably, the minimum molecular weight is about 1000. In order for the fatty acid-esterified propoxylated glycerin composition to mimic the viscosity, heat transfer properties and other properties of a frying oil, it is also desirable that the average molecular weight not exceed about 2200. Preferably, the molecular weight is below about 2000.

Preferably, behenic (i.e. saturated $C_{22}$) acid-containing fatty acid compositions are employed. Fatty acid compositions which are relatively high in behenic acid content, having at least about 30% and preferably at least about 35% by weight of $C_{22}$ saturated fatty acid, are most preferred. It is also preferred that the behenic acid content of such compositions not exceed about 60% by weight; more preferably, the behenic acid content is not in excess of about 50% by weight. The balance of the fatty acids may be any of the fatty acids previously discussed. Preferably, however, the balance of the fatty acids are predominately stearic ($C_{18}$ saturated) fatty acid. The fatty acid composition thus may comprise as much as about 70% by weight stearic acid.

Sources of behenic acid and stearic acid are well-known. For example, the fatty acids derived from rapeseed oil contain a relatively high proportion (typically about 30 to about 50 weight %) of $C_{22}$ fatty acids. The erucic acid present may be readily converted by hydrogenation to behenic acid, either before or after incorporation into the fatty acid-esterified propoxylated glycerin composition. A number of vegetable oils are known which contain high proportions (typically about 70 to about 95 weight %) of $C_{18}$ fatty acids. The unsaturated $C_{18}$ fatty acids present may be hydrogenated before or after incorporation into the fatty acid-esterified propoxylated glycerin composition. Illustrative vegetable oils of this type include, but are not limited to, soybean oil, corn oil, cottonseed oil, olive oil, peanut oil, canola oil, safflower oil, sesame oil, sunflower oil, and the like. Fatty acids derived from mixtures of such oils may also be utilized to advantage.

One specific type of EPG suitable for use in accordance with the present invention is a fatty acid-esterified

propoxylated glycerin composition having an average number of oxypropylene units of from about 4 to about 6 and an iodine value (also referred to herein as "IV") of from about 2 to about 6, wherein the fatty acids are comprised of about 35 to about 45% by weight behenic acid and about 35 to about 45% by weight stearic acid (the balance of the fatty acids being any of the other known fatty acids).

In another desirable embodiment, the fatty acid-esterified propoxylated glycerin composition has an iodine value less than or equal to about 10 (i.e., 0-10) and is obtainable by esterifying a propoxylated glycerin having an average number of oxypropylene units of from about 4 to about 6 with a fatty acid mixture wherein from about 80 to about 95 weight % of the fatty acid mixture are derived from rapeseed oil and the balance of said fatty acids are derived from a vegetable oil selected from the group consisting of soybean oil, corn oil, cottonseed oil, olive oil, peanut oil, canola oil, safflower oil, sesame oil, sunflower oil, and mixtures thereof.

A particularly preferred EPG for use in the invention is made by preparing a mixture of about 90% by weight hydrogenated rapeseed fatty acid and about 10% by weight soya fatty acid and esterifying the mixture with propoxylated glycerol to synthesize a crude EPG. The product is a fatty acid-esterified propoxylated glycerin composition having an average number of oxypropylene units per equivalent of glycerin (propoxylation number) of about 5, an iodine number less than about 5, an average number of fatty acid acyl group carbons per equivalent of glycerin of from about 54 to about 60, and a drop melting point (also called a dropping point as measured by the Mettler Dropping Point method, AOCS Official Method Cc 18-80(93)) of from about 102 to about 110°F.

The fatty acid-esterified propoxylated glycerin fat replacement compositions may be prepared using any suitable method. In general, the procedures described in the prior art for synthesizing other fatty acid-esterified propoxylated glycerin compositions will be appropriate for use provided that the necessary $C_{12}$-$C_{24}$ saturated linear fatty acids or fatty acid derivatives are employed in the esterification step. Such procedures are described, for example, in U.S. Patents Nos. 4,861,613 (the White patent, referenced above) and 4,983,329 and in European Patent Publication No. 353,928, the disclosures of which are incorporated by reference herein in their entirety. As is explained in more detail in the above-mentioned publications, either fatty acids or fatty acid equivalents such as fatty acid esters, fatty acid halides, or fatty acid anhydrides may actually be employed in the esterification. The $C_{12}$-$C_{24}$ saturated linear fatty acid acyl groups may also be introduced by using $C_{12}$-$C_{24}$ unsaturated fatty acids in the esterification step and then hydrogenating the esterified propoxylated glycerin composition to increase the proportion of $C_{12}$-$C_{24}$ saturated linear fatty acid acyl groups to the desired level. Any residual free fatty acid remaining in the composition after esterification should preferably be removed or reduced as much as possible to minimize problems with off flavor, off-odor, or storage stability.

The fatty acid-esterified propoxylated glycerin compositions are particularly suitable for use as partial replacements for the liquid or partially hydrogenated vegetable oils of the type conventionally used in preparing fried snacks. These conventional vegetable oils are selected from the group consisting of soybean, canola, cottonseed, corn, sunflower, peanut, safflower and partially hydrogenated soybean, canola, cottonseed, corn and sunflower oils.

Typically, fried snacks are comprised of 25 to 45 weight percent of a fat component. To achieve a significant reduction in available caloric content while maintaining desirable flavor and other organoleptic properties, at least 40 weight percent of the fat component is a suitable fatty-acid esterified propoxylated glycerin composition. The balance of the fat component may be a liguid and/or partially hydrogenated vegetable oil or a different fat substitute, equivalent or mimetic which is capable of being used in frying. The amount of the fat replacement composition will be from 40% to 60% of the total fat in the product.

In addition to the fat component comprised of the fatty acid-esterified propoxylated glycerin composition, the fried snack used in the invention may further comprise one or more conventional ingredients such as sugars (e.g., sucrose, fructose, glucose and maltose), water, flavorings such as jalapeno, cheese, sour cream, or nut flavorings, seasonings such as salt or pepper, milk solids (non-fat, skimmed, or whole), emulsifiers such as lecithin, antioxidants, dietary fibers, vitamins, bulking or bodying agents such as polydextrose or modified starch, salt, and the like. A sugar alcohol such as sorbitol, xylitol, or mannitol or a reduced calorie sweetener such as saccharine, aspartame, cyclamates, sucralose, acesulfame, acesulfam-K, or the like may also be employed in combination with the fatty acid-esterified propoxylated glycerin compositions.

Snack food products obtained by the use of a fat component in accordance with the invention may be readily prepared by replacing a portion of the oil component of a standard frying oil formulation with the fatty acid-esterified propoxylated glycerin fat replacement compositions described hereinabove using known processing methods and techniques as will be apparent to those skilled in the art.

**EXAMPLES**

The EPGs utilized in the examples of the invention were synthesized from rapeseed and soybean fatty acids and physically refined. The resulting materials were hydrogenated to saturation IV<4), bleached and deodorized. The deodorized products were fortified with a mixed tocopherol blend of 50% Covi-ox T70 and 50% Covitol F1300 (both available from Henkel Corp., La Grange, Illinois, U.S.A.) to a level of 0.16%. The finished products were characterized

using analytical methods commonly used by the industry to evaluate oils and fats. These methods included Wijs iodine value (AOCS Cd 1-25), dropping point (AOCS Cc 18-80 (93)) and solid fat index (AOCS Cd 10-57).

Example 1

To illustrate the effect of the average number of oxypropylene units per equivalent of glycerin on the melting characteristics of fatty acid-esterified propoxylated glycerin compositions, the following series of such compositions were synthesized using the procedures described in U. S. Patent No. 4,983,329. The average number of oxypropylene units per equivalent of glycerin was varied from 3 to 12 and various types and ratios of fatty acid were employed. In each case, the reaction was carried out until essentially all of the hydroxyl groups of the propoxylated glycerin had been esterified. The EPGs were physically refined, bleached and deodorized. The deodorized products were fortified with a mixed tocopherol blend of 50% Covi-ox T70 and 50% Covitol F1300 (both available from Henkel Corp., La Grange, Illinois, U.S.A.) to a level of 0.16%. The finished products were characterized using analytical methods commonly used by the industry to evaluate oils and fats. These methods included Wijs iodine value (AOCS Cd 1-25), dropping point (AOCS Cc 18-80 (93)) and solid fat index (AOCS Cd 10-57). The solid fat index of each composition at certain temperatures is shown in Table I.

TABLE I

| SFI DATA AT °C (°F) | | | | | | |
|---|---|---|---|---|---|---|
| **COMPOSITION** | **10 (50)** | **21 (70)** | **27 (80)** | **33 (92)** | **37 (98.6)** | **40 (104)** |
| EPG-03 ST | 82.3 | 81.4 | 80.2 | 74.1 | ND | 0.1 |
| EPG-04 ST | 79.6 | 78 | 76.2 | 60.5 | ND | 0.1 |
| EPG-05 HS | 71.9 | 64.8 | 53.9 | <0.1 | <0.1 | <0.1 |
| EPG-05 ST | 75 | 72 | 67.5 | 0.1 | ND | <0.1 |
| EPG-05 HR/ST (2/1) | 75.5 | 70.2 | 66.2 | 38.7 | 4.7 | <0.1 |
| EPG-05 HR/ST (75/25) | O/S | 68.6 | 63.4 | 36.9 | 6.9 | <0.1 |
| EPG-05 HR/ST (8/2) | 76.7 | 70.4 | 65.4 | 40.8 | 10.8 | <0.1 |
| EPG-05 HR/ST (85/15) | O/S | 86.3 | 66.9 | 45.5 | 17.5 | <0.1 |
| EPG-05 HR/ST (6/4) | O/S | 71.5 | 67.3 | 44 | 8.4 | 0.5 |
| EPG-05 HR/ST (7/3) | O/S | 64.7 | 58.2 | 28.1 | 1.1 | <0.1 |
| EPG-05 HR/ST (45/55) | O/S | 67.5 | 62.9 | 30.6 | <0.1 | <0.1 |
| EPG-05 HR/LS (7/3) | 50.4 | 29.9 | 18.4 | 5.5 | 0.4 | 0.2 |
| EPG-05 HR/LS (9/1) | 74.4 | 65.8 | 59.8 | 43.0 | ND | 2.8 |
| EPG-08 B/ST (1/1) | 74.2 | 68.3 | 60.6 | 28.2 | ND | <0.1 |
| EPG-08 HR | 70.0 | 66 | 60.9 | 25.1 | ND | <0.1 |
| EPG-08 HR/ST (45/55) | 73.7 | 67.8 | 62.7 | 24.8 | <0.1 | <0.1 |
| EPG-08 B/ST (1/3) | 69.4 | 61.6 | 38.2 | <0.1 | ND | <0.1 |
| EPG-08 B/COCO (3/1) | 65.9 | 59 | 54.4 | 48.4 | ND | 29.3 |
| EPG-12 HR | 53 | 21.2 | 5.9 | <0.1 | <0.1 | <0.1 |

KEY
HS = Fully hydrogenated soybean oil fatty acids
HR = Fully hydrogenated rapeseed oil fatty acids
ST = Contains 95% stearic (C18:0) and 5% palmitic (C16:0) acids
B = Contains 85% behenic (C22:0) and 15% stearic acids
LS = Liquid soybean oil fatty acids
Coco - coconut oil fatty acids
Fatty acid blend ratios are shown in parentheses.
O/S means

The compositions EPG-03 ST, EPG-05 HS, EPG-05 ST, EPG-05 HR/LS (7/3), EPG-08 B/Coco (3/1) and EPG-12 HR were found to be unsuitable for use according to the invention either because the SFI at 92°F was too low or the SFI at 92°F was too high or the SFI at 104°F was too high and as a consequence they were not characterized by the sharp melt required according to the present invention.

In contrast, the melting behavior of the remaining compositions were suitable. In each case, the melting range

was desirably sharp.

Example 2

Hydrogenated rapeseed fatty acid (1423kg) was blended with soybean fatty acid (140kg) to make a free fatty acid blend. The blend was reacted with propoxylated glycerin having a propoxylation number of 5 using the procedures described in U. S. Patent No. 4,983,329. The esterified product was physically refined, hydrogenated, bleached and deodorized. The hydrogenated product was fortified by blending with 0.15% tocopherol blend (50% Covi-ox T70 and 50% Covitol F1300) for 30 minutes at 60°C in a nitrogen atmosphere. The product was transferred to a belt dryer, grated and packaged.

Example 3

The grated product of Example 2 was analyzed and found to have an iodine value of 3.9 and a dropping point of 109.9°F. The solid fat index ("SFI") was as follows:

| TEMP °C (°F) | SFI |
|---|---|
| 10 (50) | 74.3 |
| 21 (70) | 67.4 |
| 27 (80) | 62.4 |
| 33 (92) | 45.9 |
| 40 (104) | 2.6 |

Example 4

The EPG product of Example 2 was blended in various ratios with WESSON vegetable oil (100% soybean oil). Idaho potato slices were freshly prepared and submerged in cold water prior to their use. For each blend ratio, a five quart deep frier was charged with 2,000 grams of the EPG/soybean oil blend. Two hundred grams of sliced potatoes were fried per batch (and four batches were prepared at each blend level) for about 4 minutes or until bubbling in the frier ceased. The remaining process details and sensory results are set forth in Table II and analytical results for used oil and potato chips are shown in Table III. Each "x" in Table II represents a panelist who picked up the attribute. On the acceptable/unacceptable scale, "a" represents acceptable, "u" represents unacceptable and the numbers represent the number of panelists reporting an acceptable or unacceptable perception.

The sensory data indicated that waxiness is not perceived in chips fried in EPG/oil blends containing up to 60% EPG. Additionally the chips were noted as having a potato flavor with little or no off-flavors. It should be noted that a rancid flavor can be an oil note and a fishy flavor is an oil note. No selective absorption of oil into the potato chips was observed.

The perceptible potato flavor was unexpected because conventionally prepared potato chips have only an oil taste and no potato taste. The potato flavor and hint of oil or an oil flavor can be optimized according to desired taste by adjusting the EPG/oil ratio.

TABLE II

| PROCESS DETAILS & SENSORY PANEL RESULTS | | | | | |
|---|---|---|---|---|---|
| Process Conditions | EPG/OIL BLEND RATIO | | | | |
| | 70/30 | 65/35 | 60/40 | 55/45 | 40/60 |
| Starting Temperature (°C) | 190 | 190 | 190 | 190 | 190 |
| Low Temperature (°C) | 145 | 143 | 146 | 145 | 143 |
| Final Temperature (°C) | 151 | 147 | 150 | 153 | 152 |
| Frying Time (min.) | 4.17 | 4.12 | 4.12 | 4.08 | 4.08 |
| Sensory Panel Results | | | | | |
| Flavor Descriptors | | | | | |
| - Corny | x | x | | | x |
| - Metallic | | | x | x | |

TABLE II (continued)

| PROCESS DETAILS & SENSORY PANEL RESULTS | | | | | |
|---|---|---|---|---|---|
| Sensory Panel Results | | | | | |
| Flavor Descriptors | | | | | |
| - Potato<br>- Rancid<br>- Other: Fishy | xxx | xxx<br><br>x | xx<br>sl. | xx<br>sl.<br>x | xxx |
| Textural Descriptors | | | | | |
| - Crisp<br>- Soggy<br>- Stale<br>- Waxy | xxxx<br>x<br><br>sl., sl., coating | x<br>xx, sl.<br>xx<br>xx, sl. | xx<br>xx | xx<br>x<br><br>x, sl. | xxx<br>xxx |
| Flavor Scale (4 pL scale) | | | | | |
| - Clean<br>- Slight Off-Flavor<br>Acceptable/Unacceptable | xxxx<br><br>a (3)<br>a/u (2) | xx<br>xx<br>a, u (2)<br>a/u (2) | xx<br>xx<br>a (5) | x<br>xxx<br>a (3)<br>u (2) | xxxx<br><br>a (4)<br>a/u |

TABLE III

| ANALYTICAL RESULTS | | | | | |
|---|---|---|---|---|---|
| Used Oil Analyses | EPG/OIL BLEND RATIO | | | | |
| | 70/30 | 65/35 | 60/40 | 55/45 | 40/60 |
| Lovibond Color, 1"cell (AOCS scale) | 2.2 R/14 Y | 3.4 R/26 Y | 3.4 R/24 Y | 1.6 R/9.6 Y | 1.5 R/9.1 Y |
| Free Fatty Acids (%) | 0.33 | 0.33 | 0.33 | 0.28 | 0.23 |
| Peroxide Value | 4.2 | 4.2 | 5.6 | 5.6 | 4.8 |
| Anisidine Value | 72.6 | 71.7 | 75.2 | 74.1 | 80.6 |
| Potato Chip Analysis | | | | | |
| Fat Content (%) - Soxhlet Extraction | 37.7 | 38.1 | 37.9 | 39.2 | 38.5 |

## Claims

**1.** The use of a fat component comprising

a) from 40% to 60% by weight of a fatty acid-esterified propoxylated glycerin composition which is at solid state at ambient temperature having a solid fat index at 33°C (92°F) of more than 25 but less than 70, wherein the solid fat index of said fatty acid-esterified propoxylated glycerin composition at 40°C (104°F) is less than 5, said composition having an average number of oxypropylene units of from 3 to 10, a porcine pancreatic lipase hydrolysis rate of less than 1% compared to an olive oil standard and an iodine number of less than 30; and

b) a liquid or partially hydrogenated vegetable oil selected from the group consisting of soybean, canola, cottonseed, corn, sunflower, peanut and safflower and partially hydrogenated soybean, canola, cottonseed, corn and sunflower oils,

for frying a reduced calorie fried snack product that does not impart a waxy mouthfeel sensation.

2. The use of claim 1 wherein the fatty acid-esterified propoxylated glycerin composition has a solid fat index at 33°C (92°F) of less than 60.

3. The use of claim 1 wherein the fatty acid-esterified propoxylated glycerin composition has a solid fat index at 33°C (92°F) of less than 50.

4. The use of claim 1 wherein the snack product comprises a potato chip or corn chip.

5. The use of claim 1 wherein the fatty acid-esterified propoxylated glycerin composition has esterified linkages and at least 80% of the linkages are secondary.

6. The use of claim 1 wherein the fatty acid-esterified propoxylated glycerin composition has an average of at least 2.5 fatty acid acyl groups per equivalent of glycerin.

7. The use of claim 1 wherein the fatty acid-esterified propoxylated glycerin composition has a number average molecular weight of at least 800 and not exceeding 2200.

**Patentansprüche**

1. Verwendung einer Fettkomponente, umfassend

   (a) 40 bis 60 Gew.% einer fettsäureveresterten propoxylierten Glyzerinzusammensetzung, die bei Raumtemperatur ein Feststoff mit einem Festfettindex bei 33°C (92° F) von mehr als 25 aber weniger als 70 ist, wobei der Festfettindex der fettsäureveresterten propoxylierten Glyzerinzusammensetzung bei 40°C (104°F) weniger als 5 beträgt, wobei die Zusammensetzung eine durchschnittliche Anzahl an Oxypropyleneinheiten von 3 bis 10 trägt, eine porcine pankreatische Lipase Hydrolysegeschwindigkeit von weniger als 1% aufweist, im Vergleich zu einem Olivenölstandard, und eine Jodzahl von weniger als 30 aufweist; und
   (b) ein flüssiges oder teilweise hydriertes Pflanzenöl, ausgewählt aus der Gruppe, die aus Sojabohnen-, Canola-, Baumwollsamen-, Mais-, Sonnenblumen-, Erdnuß- und Safflor- und teilweise hydrierten Sojabohnen-, Canola-, Baumwollsamen-, Mais- und Sonnenblumenölen besteht,

   zum Braten eines gebratenen Snackprodukts mit reduziertem Kaloriengehalt, das nicht eine wachsartige Mundgefühlanmutung verursacht.

2. Verwendung nach Anspruch 1, wobei die fettsäureveresterte propoxylierte Glyzerinzusammensetzung einen Festfettindex bei 33°C (92°F) von weniger als 60 aufweist.

3. Verwendung nach Anspruch 1, wobei die fettsäureveresterte propoxylierte Glyzerinzusammensetzung einen Festfettindex bei 33°C (92°F) von weniger als 50 aufweist.

4. Verwendung nach Anspruch 1, wobei das Snackprodukt einen Kartoffel- oder Maischip umfaßt.

5. Verwendung nach Anspruch 1, wobei die fettsäureveresterte propoxylierte Glyzerinzusammensetzung veresterte Bindungen aufweist und mindestens 80% der Bindungen sekundär sind.

6. Verwendung nach Anspruch 1, wobei die fettsäureveresterte propoxylierte Glyzerinzusammensetzung durchschnittlich mindestens 2,5 Fettsäureacylgruppen pro Äquivalent Glyzerin aufweist.

7. Verwendung nach Anspruch 1, wobei die fettsäureveresterte propoxylierte Glyzerinzusammensetzung ein zahlengemitteltes Molekulargewicht von mindestens 800 und nicht mehr als 2200 aufweist.

**Revendications**

1. Utilisation d'un composant gras comprenant:

   a) de 40 à 60 % en poids d'une composition de glycérine propoxylée estérifiée avec de l'acide gras qui est à

l'état solide à température ambiante et qui a un indice de graisse solide à 33°C (92°F) supérieur à 25 mais inférieur à 70, dans laquelle l'indice de graisse solide de ladite composition de glycérine propoxylée estérifiée avec de l'acide gras à 40°C (104°F) est inférieur à 5, ladite composition ayant un nombre moyen d'unités d'oxypropylène compris entre 3 et 10, un taux d'hydrolyse de la lipase pancréatique porcine de moins de 1 % par comparaison à un témoin huile d'olive, et un nombre d'iode inférieur à 30 ; et

b) une huile végétale liquide ou partiellement hydrogénée sélectionnée à partir du groupe constitué des huiles de soja, de canola, de graine de coton, de maïs, de tournesol, d'arachide et de carthame et des huiles partiellement hydrogénées de soja, de canola, de graines de coton, de maïs et de tournesol,

pour frire un produit de grignotage frit à basses calories sans conférer une sensation cireuse en bouche.

**2.** Utilisation selon,la revendication 1, dans laquelle la composition de glycérine propoxylée estérifiée avec de l'acide gras a un indice de graisse solide à 33°C (92°F) inférieur à 60.

**3.** Utilisation selon la revendication 1, dans laquelle la composition de glycérine propoxylée estérifiée avec de l'acide gras a un indice de graisse solide à 33°C (92°F) inférieur à 50.

**4.** Utilisation selon la revendication 1, dans laquelle le produit de grignotage comprend une chips de pomme de terre ou une chips de maïs.

**5.** Utilisation selon la revendication 1, dans laquelle la composition de glycérine propoxylée estérifiée avec de l'acide gras a des liaisons estérifiées et au moins 80 % des liaisons sont secondaires.

**6.** Utilisation selon la revendication 1, dans laquelle la composition de glycérine propoxylée estérifiée avec de l'acide gras a en moyenne au moins 2,5 groupes acyles d'acide gras par équivalent de glycérine.

**7.** Utilisation selon la revendication 1, dans laquelle la composition de glycérine propoxylée estérifiée avec de l'acide gras a un nombre moyen de masse moléculaire d'au moins 800 et ne dépassant pas 2.200.